# EUROPEAN PATENT APPLICATION

(11) **EP 4 461 403 A2**
(43) Date of publication of application: **13.11.2024**
(21) Application number: 24171856.8
(22) Date of filing: 23.04.2024
(51) Int. Cl.: B01J 20/22, B01D 53/02

(54) **ORGANOMETALLIC STRUCTURE WITH EXCELLENT VOC ADSORPTION AND OUTGASSING PREVENTION PERFORMANCE AND ARTICLES COMPRISING THE SAME**

(30) Priority: 12.05.2023 KR 20230062013; 15.06.2023 KR 20230077052; 18.04.2024 KR 20240052244
(71) Applicant: Labincube Co., Ltd., Chungcheongbuk-do 28116 (KR)
(72) Inventor: CHOI, Kyung Min, 07440 Seoul (KR); LEE, Hyeon Shin, 03433 Seoul (KR)
(74) Representative: Beck & Rössig European Patent Attorneys

(57) **Abstract**

The invention relates to an organometallic structure having excellent adsorption performance for volatile organic compounds (VOCs) and at the same time, having excellent outgassing prevention performance for adsorbed VOCs. The invention is a zirconium-based organometallic structure (MOF) characterized by simultaneously securing adsorption performance and outgassing prevention performance for VOCs by introducing an amine group (-NH₂) into the crystal structure.

## Description

### BACKGROUND OF THE INVENTION

### 1. Field of the Invention

The present invention relates to an organometallic structure having excellent adsorption performance for volatile organic compounds (VOCs) and at the same time, having excellent outgassing prevention performance for adsorbed VOCs, and an article including the same.

### 2. Description of the Related Art

It is required to improve adsorption performance for formaldehyde and outgassing prevention performance for adsorbed formaldehyde.

However, in the case of activated carbon, which has been used for the removal of VOCs as well as for the removal of particles (dust), for example, a 25-pyeong air purifier can handle 25 pyeong of particles (dust), but can only handle about 5 pyeong of VOCs, and thus, has significantly insufficient removal performance for VOCs compared to its removal performance for particles (dust). In addition, activated carbon causes outgassing of adsorbed VOCs, so that there is a problem of re-occurrence of adsorbed VOCs when using a filter for a long period of time.

Meanwhile, the following patent literature discloses a technique of using MIL-125 MOF, a titanium-based organometallic structure, for adsorption of formaldehyde in order to improve the low VOCs adsorption properties of activated carbon. However, MIL-125 MOF has adsorption performance of VOCs superior to that of activated carbon, but has outgassing performance inferior to that of activated carbon, so that the problem of re-occurrence of adsorbed VOCs when using a filter has not been solved.

### [Prior Art Document]

### [Patent Literature]

(Patent Document 1) Korean Patent Laid-Open Publication No. 2023-0033579

### SUMMARY OF THE INVENTION

The present invention is to provide an organometallic structure having excellent adsorption performance for VOCs as well as improved outgassing prevention performance for adsorbed VOCs.

As a means to solve the above problem, the invention provides an organometallic structure of the following (1) to (6) and an article of (7) and (8).
(1) An organometallic structure, which is a zirconium-based organometallic structure (MOF) containing fumaric acid as an organic linker, having excellent adsorption performance and outgassing prevention performance for volatile organic compounds.
(2) In (1) above, the organometallic structure further includes L-aspartic acid as an organic linker.
(3) In (2) above, the mixing ratio of the fumaric acid and L-aspartic acid is 9.5:0.5 to 0.1:9.9, 9:1 to 1:9, 8.5:1.5 to 1.5:8.5, 8:2 to 2:8, 7.5:2.5 to 2.5:7.5, or 7:3 to 3:7.
(4) In any one among (1) to (3) above, the organometallic structure has a crystal structure, and the size of a pore entrance formed by the crystal structure is larger than the size of the inside of a pore.
(5) In (4) above, an amine group (NH₂) is located inside the pore.
(6) In any one among (1) to (5), the organometallic structure has a VOCs adsorption rate of 95% or higher, and an outgassing rate of 2.5% or lower.
(7) An article including the organometallic structure of any one among (1) to (6).
(8) In (7) above, the article includes a filter.

### ADVANTAGEOUS EFFECTS

Compared to a typical organometallic structure, an organometallic structure according to the invention has improved adsorption performance for VOCs as well as improved outgassing prevention performance for adsorbed VOCs.

### BRIEF DESCRIPTION OF THE DRAWINGS

Fig. 1 shows images of organometallic structures synthesized according to Examples 1 to 10 and Comparative Example 2 of the invention;
Fig. 2 shows results of PXRD analysis of the organometallic structures synthesized according to Examples 1 to 10 and Comparative Example 2 of the invention;
Fig. 3 shows results of the evaluation of formaldehyde adsorption and outgassing prevention performance of the organometallic structures according to Examples 6 and Comparative Example 1 (MIL-125);
Fig. 4 shows results of the evaluation of formaldehyde adsorption and outgassing prevention performance of the organometallic structures according to Examples 1 to 10 and Comparative Example 2;
Fig. 5 shows images of organometallic structures synthesized according to Examples 11 to 14 of the invention;
Fig. 6 shows results of PXRD analysis of the organometallic structures synthesized according to Examples 11 to 14 of the invention;
Fig. 7 shows results of the evaluation of formaldehyde adsorption and outgassing prevention performance of the organometallic structures according to Examples 11 to 14;

### DETAILED DESCRIPTION OF THE EXEMPLARY EMBODIMENTS

Hereinafter, embodiments of the invention will be described in detail with reference to the accompanying drawings.

However, the embodiments of the invention illustrated below may be modified into other various forms, and the scope of the invention is not limited to the embodiments described below. The embodiments of the invention are provided to more fully describe the invention to those skilled in the art.

### [Example 1]

An organometallic structure according to Example 1 was synthesized by the following process using the raw materials shown in Table 1 below.

**[Table 1]**

| **Material name** | **Weight (g)** | **Notes** |
|---|---|---|
| Zirconyl chloride (ZrOCl₂.8H₂O) | 32.23 | 100 parts by weight |
| L-aspartic acid | - | - |
| Fumaric acid | 24.37 | 75.6 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 12.19 g (0.21 mol) of fumaric acid was added thereto and stirred. The final solution was subjected to a reflux reaction for 24 hours at 120 °C to synthesize the organometallic structure of Example 1 (InCube 206 (0:10)). After the synthesis was completed, Büchner filtration was performed and washing was performed using water and ethanol. After the washing was completed, vacuum-drying in an oven at 110 °C was performed to obtain a white powdery organometallic structure.

Since the formic acid used in Table 1 is a substance used as a solvent, it is not substantially included in the obtained organometallic structure, but a small amount of formic acid may remain in the form of an impurity during the synthesis process. This is the same for the organometallic structures obtained according to Examples 2 to 14 below.

### [Example 2]

An organometallic structure according to Example 2 was synthesized by the following process using the raw materials shown in Table 2 below.

**[Table 2]**

| **Material name** | **Weight (g)** | **Notes** |
|---|---|---|
| Zirconyl chloride (ZrOCl₂.8H₂O) | 32.23 | 100 parts by weight |
| L-aspartic acid | 2.80 | 8.68 parts by weight |
| Fumaric acid | 21.94 | 68.1 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 2.80 g (0.021 mol) of L-aspartic acid was added thereto and then completely dissolved. Lastly, 21.94 g (0.189 mol) of fumaric acid was added thereto and then stirred. The final solution was subjected to a reflux reaction for 24 hours at 120 °C to synthesize the organometallic structure of Example 2 (InCube 206 (1:9)). After the synthesis was completed, Büchner filtration was performed and washing was performed using water and ethanol. After the washing was completed, vacuum-drying in an oven at 110 °C was performed to obtain a white powdery organometallic structure.

### [Example 3]

An organometallic structure according to Example 3 was synthesized by the following process using the raw materials shown in Table 3 below.

**[Table 3]**

| **Material name** | **Weight (g)** | **Notes** |
|---|---|---|
| Zirconyl chloride (ZrOCl₂.8H₂O) | 32.23 | 100 parts by weight |
| L-aspartic acid | 5.59 | 17.3 parts by weight |
| Fumaric acid | 19.5 | 60.5 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 5.59 g (0.042 mol) of L-aspartic acid was added thereto and then completely dissolved. Lastly, 19.5 g (0.168 mol) of fumaric acid was added thereto and then stirred. The final solution was subjected to a reflux reaction for 24 hours at 120 °C to synthesize the organometallic structure of Example 3 (InCube 206 (2:8)). After the synthesis was completed, Büchner filtration was performed and washing was performed using water and ethanol. After the washing was completed, vacuum-drying in an oven at 110 °C was performed to obtain a white powdery organometallic structure.

### [Example 4]

An organometallic structure according to Example 4 was synthesized by the following process using the raw materials shown in Table 4 below.

**[Table 4]**

| **Material name** | **Weight (g)** | **Notes** |
|---|---|---|
| Zirconyl chloride (ZrOCl₂.8H₂O) | 32.23 | 100 parts by weight |
| L-aspartic acid | 8.39 | 26.0 parts by weight |
| Fumaric acid | 17.06 | 52.9 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 8.39 g (0.063 mol) of L-aspartic acid was added thereto and then completely dissolved. Lastly, 17.06 g (0.147 mol) of fumaric acid was added thereto and then stirred. The final solution was subjected to a reflux reaction for 24 hours at 120 °C to synthesize the organometallic structure of Example 4 (InCube 206 (3:7)). After the synthesis was completed, Büchner filtration was performed and washing was performed using water and ethanol. After the washing was completed, vacuum-drying in an oven at 110 °C was performed to obtain a white powdery organometallic structure.

### [Example 5]

An organometallic structure according to Example 5 was synthesized by the following process using the raw materials shown in Table 5 below.

**[Table 5]**

| **Material name** | **Weight (g)** | **Notes** |
|---|---|---|
| Zirconyl chloride (ZrOCl₂.8H₂O) | 32.23 | 100 parts by weight |
| L-aspartic acid | 11.18 | 34.7 parts by weight |
| Fumaric acid | 14.63 | 45.4 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 11.18 g (0.084 mol) of L-aspartic acid was added thereto and then completely dissolved. Lastly, 14.63 g (0.126 mol) of fumaric acid was added thereto and then stirred. The final solution was subjected to a reflux reaction for 24 hours at 120 °C to synthesize the organometallic structure of Example 5 (InCube 206 (4:6)). After the synthesis was completed, Büchner filtration was performed and washing was performed using water and ethanol. After the washing was completed, vacuum-drying in an oven at 110 °C was performed to obtain a white powdery organometallic structure.

### [Example 6]

An organometallic structure according to Example 6 was synthesized by the following process using the raw materials shown in Table 6 below.

**[Table 6]**

| **Material name** | **Weight (g)** | **Notes** |
|---|---|---|
| Zirconyl chloride (ZrOCl₂.8H₂O) | 32.23 | 100 parts by weight |
| L-aspartic acid | 13.98 | 43.4 parts by weight |
| Fumaric acid | 12.19 | 37.8 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 13.98 g (0.105 mol) of L-aspartic acid was added thereto and then completely dissolved. Lastly, 12.19 g (0.105 mol) of fumaric acid was added thereto and then stirred. The final solution was subjected to a reflux reaction for 24 hours at 120 °C to synthesize the organometallic structure of Example 6 (InCube 206 (5:5)). After the synthesis was completed, Büchner filtration was performed and washing was performed using water and ethanol. After the washing was completed, vacuum-drying in an oven at 110 °C was performed to obtain a white powdery organometallic structure.

### [Example 7]

An organometallic structure according to Example 7 was synthesized by the following process using the raw materials shown in Table 7 below.

**[Table 7]**

| **Material name** | **Weight (g)** | **Notes** |
|---|---|---|
| Zirconyl chloride (ZrOCl₂.8H₂O) | 32.23 | 100 parts by weight |
| L-aspartic acid | 16.77 | 52.0 parts by weight |
| Fumaric acid | 9.75 | 30.3 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 16.77 g (0.126 mol) of L-aspartic acid was added thereto and then completely dissolved. Lastly, 9.75 g (0.084 mol) of fumaric acid was added thereto and then stirred. The final solution was subjected to a reflux reaction for 24 hours at 120 °C to synthesize the organometallic structure of Example 7 (InCube 206 (6:4)). After the synthesis was completed, Büchner filtration was performed and washing was performed using water and ethanol. After the washing was completed, vacuum-drying in an oven at 110 °C was performed to obtain a white powdery organometallic structure.

### [Example 8]

An organometallic structure according to Example 8 was synthesized by the following process using the raw materials shown in Table 8 below.

**[Table 8]**

| **Material name** | **Weight (g)** | **Notes** |
|---|---|---|
| Zirconyl chloride (ZrOCl₂.8H₂O) | 32.23 | 100 parts by weight |
| L-aspartic acid | 19.57 | 60.7 parts by weight |
| Fumaric acid | 7.31 | 22.7 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 19.57 g (0.147 mol) of L-aspartic acid was added thereto and then completely dissolved. Lastly, 7.31 g (0.063 mol) of fumaric acid was added thereto and then stirred. The final solution was subjected to a reflux reaction for 24 hours at 120 °C to synthesize the organometallic structure of Example 8 (InCube 206 (7:3)). After the synthesis was completed, Büchner filtration was performed and washing was performed using water and ethanol. After the washing was completed, vacuum-drying in an oven at 110 °C was performed to obtain a white powdery organometallic structure.

### [Example 9]

An organometallic structure according to Example 9 was synthesized by the following process using the raw materials shown in Table 9 below.

**[Table 9]**

| **Material name** | **Weight (g)** | **Notes** |
|---|---|---|
| Zirconyl chloride (ZrOCl₂.8H₂O) | 32.23 | 100 parts by weight |
| L-aspartic acid | 22.36 | 69.4 parts by weight |
| Fumaric acid | 4.87 | 15.1 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 22.36 g (0.168 mol) of L-aspartic acid was added thereto and then completely dissolved. Lastly, 4.87 g (0.042 mol) of fumaric acid was added thereto and then stirred. The final solution was subjected to a reflux reaction for 24 hours at 120 °C to synthesize the organometallic structure of Example 9 (InCube 206 (8:2)). After the synthesis was completed, Büchner filtration was performed and washing was performed using water and ethanol. After the washing was completed, vacuum-drying in an oven at 110 °C was performed to obtain a white powdery organometallic structure.

### [Example 10]

An organometallic structure according to Example 10 was synthesized by the following process using the raw materials shown in Table 10 below.

**[Table 10]**

| **Material name** | **Weight (g)** | **Notes** |
|---|---|---|
| Zirconyl chloride (ZrOCl₂.8H₂O) | 32.23 | 100 parts by weight |
| L-aspartic acid | 25.16 | 78.1 parts by weight |
| Fumaric acid | 2.44 | 7.57 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 25.16 g (0.189 mol) of L-aspartic acid was added thereto and then completely dissolved. Lastly, 2.44 g (0.021 mol) of fumaric acid was added thereto and then stirred. The final solution was subjected to a reflux reaction for 24 hours at 120 °C to synthesize the organometallic structure of Example 10 (InCube 206 (9:1)). After the synthesis was completed, Büchner filtration was performed and washing was performed using water and ethanol. After the washing was completed, vacuum-drying in an oven at 110 °C was performed to obtain a white powdery organometallic structure.

### [Example 11]

An organometallic structure according to Example 11 was synthesized by the following process using the raw materials shown in Table 11 below.

**[Table 11]**

| **Material name** | **Weight (g)** | **Notes** |
|---|---|---|
| Zirconyl chloride (ZrOCl₂.8H₂O) | 32.23 | 100 parts by weight |
| L-aspartic acid | 26.55 | 82.38 parts by weight |
| Fumaric acid | 1.22 | 3.79 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 26.55 g (0.1995 mol) of L-aspartic acid was added thereto and then completely dissolved. Lastly, 1.22 g (0.0105 mol) of fumaric acid was added thereto and then stirred. The final solution was subjected to a reflux reaction for 24 hours at 120 °C to synthesize the organometallic structure of Example 11 (InCube 206 (0.5:9.5)). After the synthesis was completed, Büchner filtration was performed and washing was performed using water and ethanol. After the washing was completed, vacuum-drying in an oven at 110 °C was performed to obtain a white powdery organometallic structure.

### [Example 12]

An organometallic structure according to Example 12 was synthesized by the following process using the raw materials shown in Table 12 below.

**[Table 12]**

| **Material name** | **Weight (g)** | **Notes** |
|---|---|---|
| Zirconyl chloride | 32.23 | 100 parts by weight |
| (ZrOCl₂.8H₂O) | | |
| L-aspartic acid | 26.83 | 83.25 parts by weight |
| Fumaric acid | 0.97 | 3.01 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 26.83 g (0.2016 mol) of L-aspartic acid was added thereto and then completely dissolved. Lastly, 0.97 g (0.0084 mol) of fumaric acid was added thereto and then stirred. The final solution was subjected to a reflux reaction for 24 hours at 120 °C to synthesize the organometallic structure of Example 12 (InCube 206 (0.4:9.6)). After the synthesis was completed, Büchner filtration was performed and washing was performed using water and ethanol. After the washing was completed, vacuum-drying in an oven at 110 °C was performed to obtain a white powdery organometallic structure.

### [Example 13]

An organometallic structure according to Example 13 was synthesized by the following process using the raw materials shown in Table 13 below.

**[Table 13]**

| **Material name** | **Weight (g)** | **Notes** |
|---|---|---|
| Zirconyl chloride (ZrOCl₂.8H₂O) | 32.23 | 100 parts by weight |
| L-aspartic acid | 27.11 | 84.11 parts by weight |
| Fumaric acid | 0.73 | 2.26 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 27.11 g (0.2037 mol) of L-aspartic acid was added thereto and then completely dissolved. Lastly, 0.73 g (0.0063 mol) of fumaric acid was added thereto and then stirred. The final solution was subjected to a reflux reaction for 24 hours at 120 °C to synthesize the organometallic structure of Example 13 (InCube 206 (0.3:9.7)). After the synthesis was completed, Büchner filtration was performed and washing was performed using water and ethanol. After the washing was completed, vacuum-drying in an oven at 110 °C was performed to obtain a white powdery organometallic structure.

### [Example 14]

An organometallic structure according to Example 14 was synthesized by the following process using the raw materials shown in Table 14 below.

**[Table 14]**

| **Material name** | **Weight (g)** | **Notes** |
|---|---|---|
| Zirconyl chloride (ZrOCl₂.8H₂O) | 32.23 | 100 parts by weight |
| L-aspartic acid | 27.67 | 85.85 parts by weight |
| Fumaric acid | 0.24 | 0.75 parts by weight |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 27.67 g (0.2079 mol) of L-aspartic acid was added thereto and then completely dissolved. Lastly, 0.24 g (0.0021 mol) of fumaric acid was added thereto and then stirred. The final solution was subjected to a reflux reaction for 24 hours at 120 °C to synthesize the organometallic structure of Example 14 (InCube 206 (0.1:9.9)). After the synthesis was completed, Büchner filtration was performed and washing was performed using water and ethanol. After the washing was completed, vacuum-drying in an oven at 110 °C was performed to obtain a white powdery organometallic structure.

### [Example 15]

In order to measure formaldehyde absorption/outgassing properties of the organometallic structures according to Examples 1 to 14, suspensions were respectively prepared using the organometallic structures according to Examples 1 to 14, and the suspensions were subjected to roll-to-roll coating known in the art and then dried. At this time, the amount of sample loaded on a coated sheet was 30 g to 100 g per 1m² of the sheet.

### [Comparative Example 1]

For comparison with Examples 1 to 10, MIL125 MOF was synthesized by the following process.

0.5 g (0.003 mol) of terephthalic acid was added to DMF/MeOH (9/1 mL) and then completely dissolved. 0.26 ml (0.0008 mol) of titanium butoxide was added to the above-prepared solution and then stirred. The mixture was transferred to a 20 mL Teflon container, placed in an autoclave, and then heated to 150 °C for 24 hours. After the synthesis was completed, primary filtration was performed using a centrifuge, and DMF and MeOH were washed three times each. After the washing was completed, vacuum-drying in an oven at 80 °C was performed to obtain a white powdery organometallic structure.

### [Comparative Example 2]

An organometallic structure according to Comparative Example 2 was synthesized by the following process using the raw materials shown in Table 10 below.

**[Table 11]**

| **Material name** | **Weight (g)** | **Notes** |
|---|---|---|
| Zirconyl chloride (ZrOCl₂.8H₂O) | 32.23 | 100 parts by weight |
| L-aspartic acid | 27.95 | 86.7 parts by weight |
| Fumaric acid | - | - |
| Formic acid | 92.06 | 285.6 parts by weight |
| Distilled water (DI) | 100 | 310.3 parts by weight |

32.23 g (0.1 mol) of zirconium(IV) oxychloride was added to 100 ml of distilled water and then completely melted. 92.06 g of formic acid was added to the above-prepared solution and then stirred.

Thereafter, 27.95 g (0.21 mol) of L-aspartic acid was added thereto and then completely dissolved. The final solution was subjected to a reflux reaction for 24 hours at 120 °C to synthesize the organometallic structure of Comparative Example 2 (InCube 206 (0:10)). After the synthesis was completed, Büchner filtration was performed and washing was performed using water and ethanol. After the washing was completed, vacuum-drying in an oven at 110 °C was performed to obtain a white powdery organometallic structure.

### [Comparative Example 3]

As a method for preparing a sample for measuring formaldehyde absorption/outgassing properties of the organometallic structures according to Comparative Examples 1 and 2, a suspension was prepared using the organometallic structure according to Comparative Example 1, and the suspension was subjected to roll-to-roll coating known in the art and then dried. At this time, the amount of sample loaded on a coated sheet was 30 g to 50 g per 1m² of the sheet.

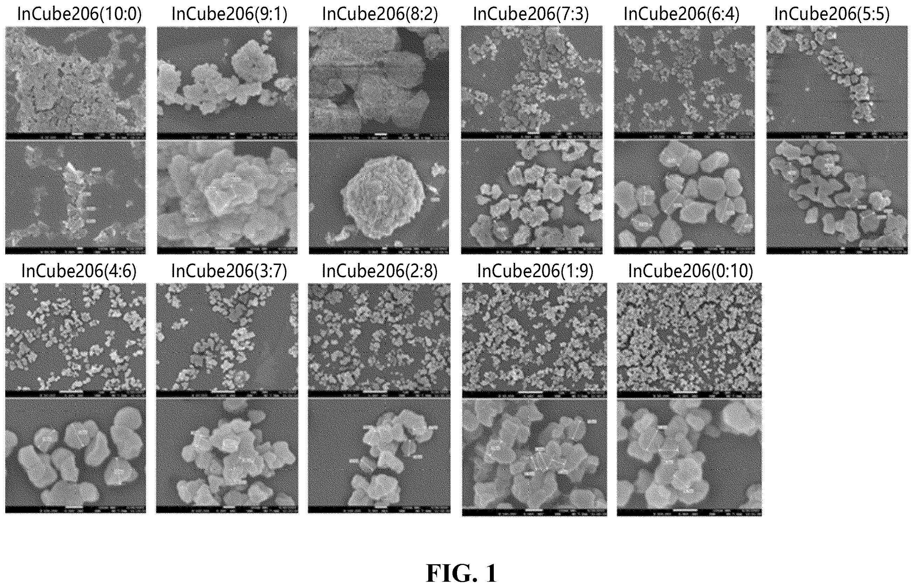

Fig. 1 shows images of organometallic structures synthesized according to Examples 1 to 10 and Comparative Example 2 of the invention. As confirmed in Fig. 1, the organometallic structures synthesized according to Examples 1 to 10 and Comparative Example 2 were formed in a particle phase having a size in the range of approximately several nm to hundreds of nm.

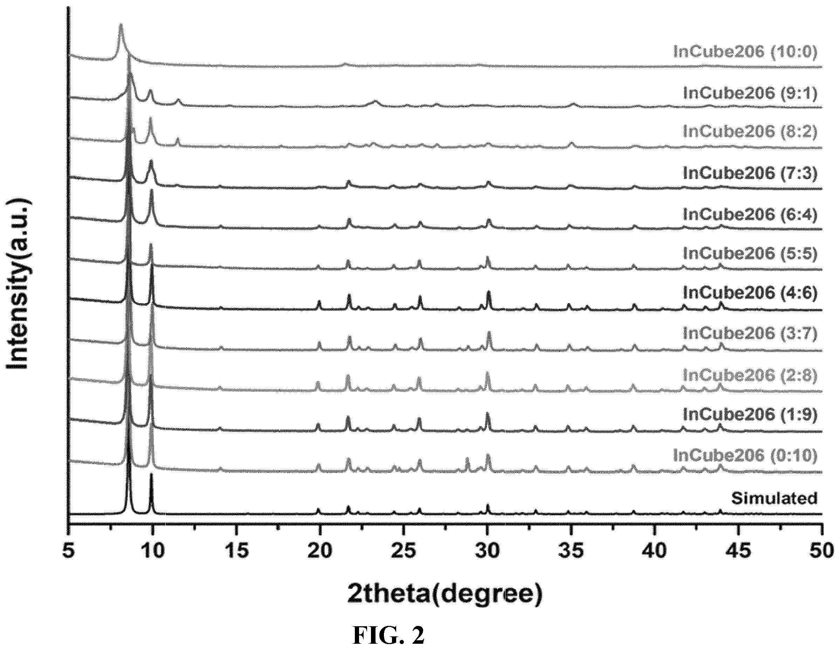

Fig. 2 shows results of PXRD analysis of the organometallic structures synthesized according to Examples 1 to 10 and Comparative Example 2 of the invention. As confirmed in Fig. 2, it has been confirmed through the PXRD analysis that the organometallic structures synthesized according to Examples 1 to 10 and Comparative Example 2 were formed in a crystalline phase.

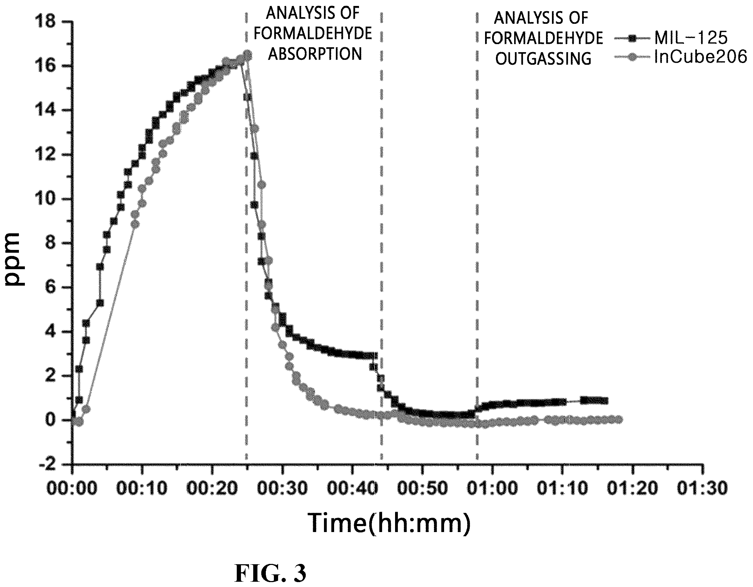

Fig. 3 shows results of the analysis of formaldehyde adsorption and outgassing prevention performance of specimens prepared through roll-to-roll coating of the organometallic structure powder synthesized according to Example 6 and Comparative Example 1 (MIL-125, Indicated as "current material" in the drawing) of the invention. As confirmed in Fig. 3, it can be confirmed that the formaldehyde adsorption and outgassing performance of the sample of Example 6 is superior that that of the current sample.

Using a circular adsorption measurement system, formaldehyde adsorption and outgassing performance was evaluated in ppm units. At this time, a formaldehyde adsorption isothermal curve was derived by preparing a formaldehyde gas of a specific concentration and passing the gas through a roll-to-roll coated specimen in a chamber of the measurement system, and then tracking the concentration change in the chamber. In order to measure the adsorption performance, a formaldehyde gas of about 20 ppm or less was passed through the specimen and the amount of formaldehyde adsorption was measured for 20 minutes. In addition, after the adsorption, the amount of re-outgassing of formaldehyde from the specimen was measured by measuring the amount of formaldehyde generated from the specimen for 20 minutes by introducing a gas that does not contain formaldehyde.

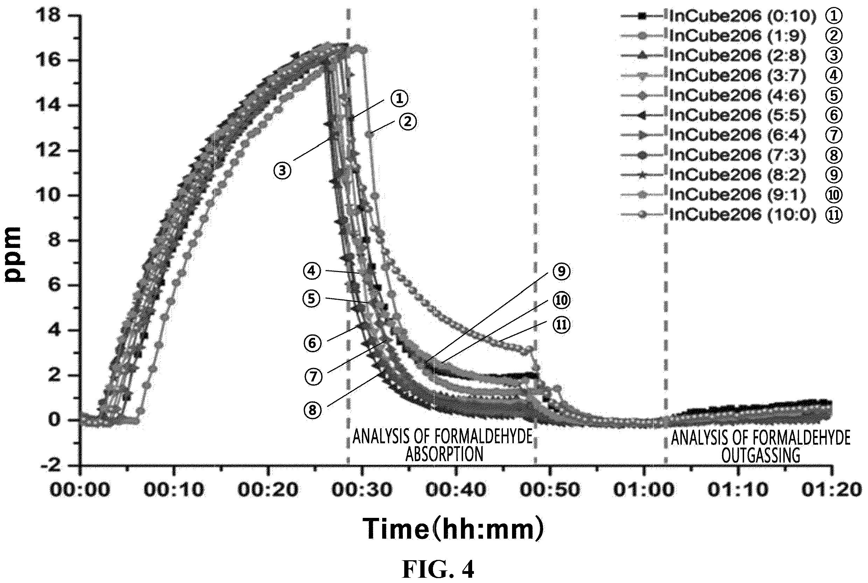

Fig. 4 shows results of the evaluation of formaldehyde adsorption and outgassing prevention performance of the organometallic structures according to Examples 1 to 10 and Comparative Example 2.

As confirmed in Fig. 4, Examples 2 to 10 have formaldehyde adsorption and outgassing prevention performance superior to that of the current material, which is Comparative Example 1, and it can be seen that Examples 4 to 8 in particular have significantly improved adsorption and outgassing prevention performance compared to that the current material.

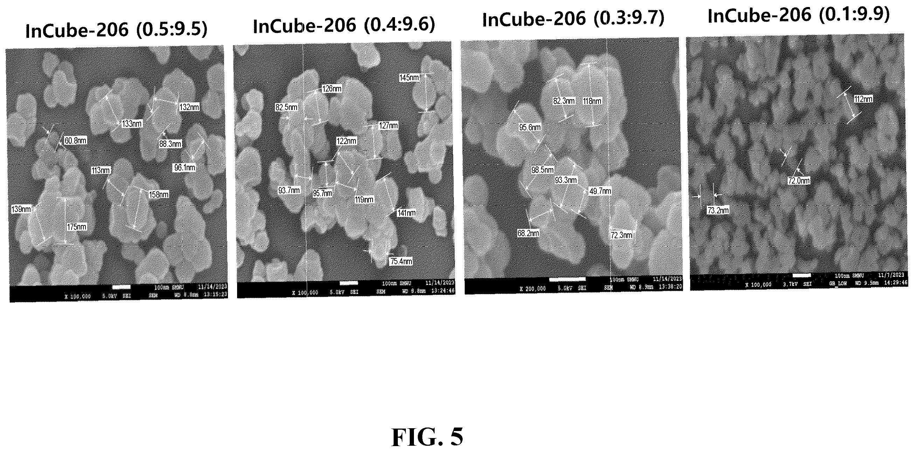

Fig. 5 shows images of organometallic structures synthesized according to Examples 11 to 14 of the invention. As confirmed in Fig. 5, the organometallic structures synthesized according to Examples 11 to 14 were formed in a particle phase having a size in the range of approximately several nm to hundreds of nm.

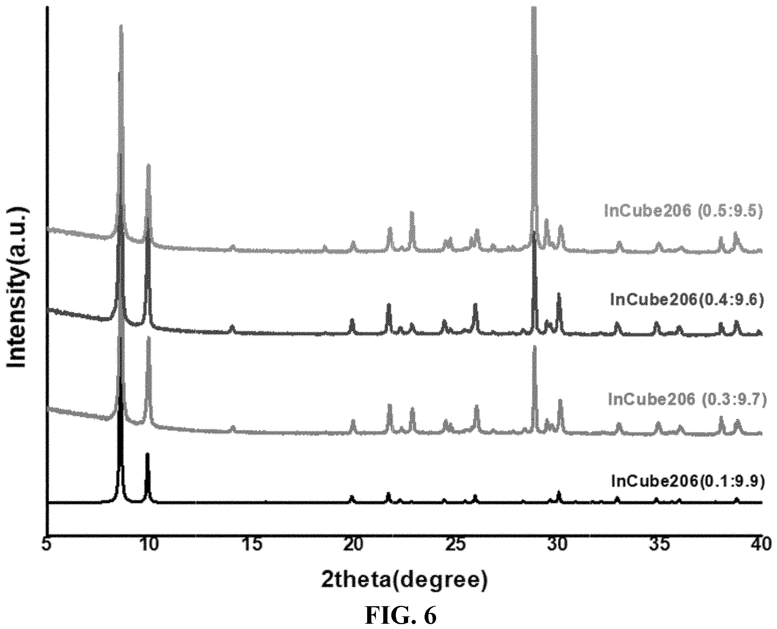

Fig. 6 shows results of PXRD analysis of the organometallic structures synthesized according to Examples 11 to 14 of the invention. As confirmed in Fig. 6, it has been confirmed through the PXRD analysis that the organometallic structures synthesized according to Examples 11 to 14 were formed in a crystalline phase.

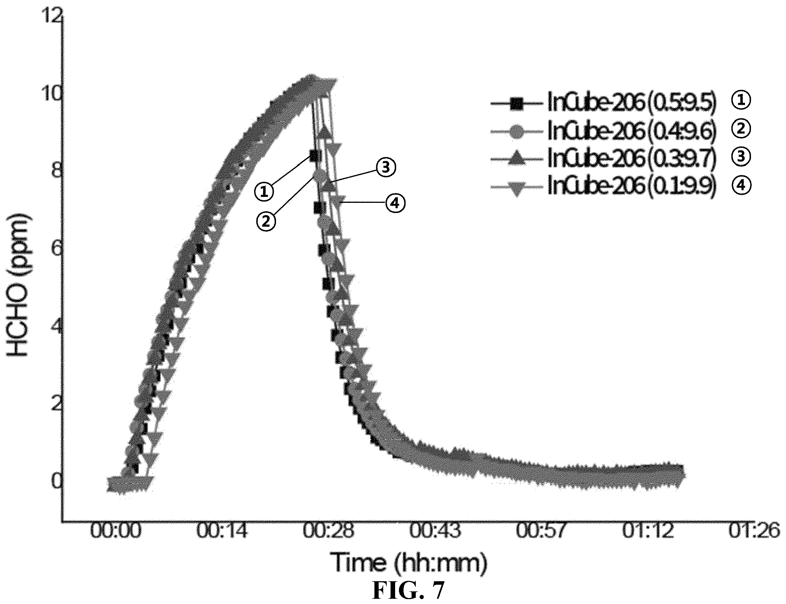

Fig. 7 shows results of the evaluation of formaldehyde adsorption and outgassing prevention performance of the organometallic structures according to Examples 11 to 14. As confirmed in Figure 7, Examples 11 to 14 have superior formaldehyde adsorption and outgassing prevention performance compared to Comparative Example 1.

Table 16 is a numerical representation of the results of Fig. 4 and 7, and shows the result of summarizing formaldehyde adsorption amounts and adsorption rates, and formaldehyde outgassing amounts and outgassing rates.

**[Table 16]**

| **Classification (Fumaric acid:L-aspartic acid molar ratio)** | **Formaldehyde adsorption amount** | **Formaldehyde adsorption rate** | **Formaldehyde outgassing amount** | **Formaldehyde outgassing rate** | **Notes** |
|---|---|---|---|---|---|
| | **ppm** | **%** | **ppm** | **%** | |
| MIL-125 | 13.30 | 82.1 | 0.68 | 4.20 | Comparative Example 1 |
| InCube206 (10:0) | 13.37 | 80.9 | 0.66 | 3.99 | Example 1 |
| InCube206 (9:1) | 14.93 | 89.6 | 0.48 | 2.88 | Example 2 |
| InCube206 (8:2) | 14.88 | 90.3 | 0.45 | 2.73 | Example 3 |
| InCube206 (7:3) | 15.86 | 96.2 | 0.26 | 1.58 | Example 4 |
| InCube206 (6:4) | 16.28 | 98.1 | 0.20 | 1.21 | Example 5 |
| InCube206 (5:5) | 16.35 | 98.8 | 0.19 | 1.20 | Example 6 |
| InCube206 (4:6) | 16.05 | 96.7 | 0.31 | 1.87 | Example 7 |
| InCube206 (3:7) | 15.83 | 95.2 | 0.38 | 2.28 | Example 8 |
| InCube206 (2:8) | 15.42 | 94.6 | 0.45 | 2.76 | Example 9 |
| InCube206 (1:9) | 15.25 | 92.2 | 0.54 | 3.26 | Example 10 |
| InCube206 (0:10) | 14.62 | 88.0 | 0.89 | 5.35 | Comparative Example 2 |
| InCube206 (0.5:9.5) | 9.910 | 92.0 | 0.35 | 3.52 | Example 11 |
| InCube206 (0.4:9.6) | 9.845 | 91.4 | 0.36 | 3.64 | Example 12 |
| InCube206 (0.3:9.7) | 9.822 | 91.2 | 0.36 | 3.68 | Example 13 |
| InCube206 (0.1:9.9) | 9.811 | 90.7 | 0.36 | 3.71 | Example 14 |

As confirmed in Table 16, Example 1 to 14 of the invention have a higher formaldehyde adsorption amount as well as a lower formaldehyde outgassing rate than those of MIL-125 previously developed to improve the adsorption performance of VOCs.

Meanwhile, In the case of Comparative Example 2, which does not include fumaric acid, the adsorption amount of formaldehyde was improved compared to that of MIL-125 MPa, but the outgassing rate of formaldehyde was further increased.

Among Examples of the invention, it can be seen that Example 4 (InCube206-(7:3)) to Example 8 (InCube206-(3:7)) in particular have a high adsorption rate of formaldehyde, and at the same time, have a low outgassing rate of formaldehyde, and thus, have more desirable performance.

## Claims

1. An organometallic structure, which is a zirconium-based organometallic structure (MOF) containing fumaric acid as an organic linker, having excellent adsorption performance and outgassing prevention performance for volatile organic compounds.

2. The organometallic structure of Claim 1, further comprising L-aspartic acid as an organic linker.

3. The organometallic structure of Claim 2,
wherein the mixing ratio of the fumaric acid and the L-aspartic acid is 9.5:0.5 to 0.1:9.9 in molar ratio.

4. The organometallic structure of Claim 2,
wherein the mixing ratio of the fumaric acid and the L-aspartic acid is 9:1 to 1:9 in molar ratio.

5. The organometallic structure of Claim 2,
wherein the mixing ratio of the fumaric acid and the L-aspartic acid is 7.5:2.5 to 2.5:7.5 in molar ratio.

6. The organometallic structure of any one of Claims 1 to 5,
wherein the organometallic structure has a crystal structure, and the size of a pore entrance formed by the crystal structure is larger than the size of the inside of a pore.

7. The organometallic structure of Claim 6,
wherein an amine group (NH₂) is located inside the pore.

8. The organometallic structure of any one of Claims 1 to 5,
wherein the organometallic structure has a VOCs adsorption rate of 95% or higher, and an outgassing rate of 2.5% or lower.

9. An article comprising the organometallic structure according to any one of Claims 1 to 5.
